# EUROPEAN PATENT SPECIFICATION

(11) **EP 1 355 800 B1**
(45) Date of publication and mention of the grant of the patent: **01.06.2005**
(21) Application number: 01270437.5
(22) Date of filing: 11.12.2001
(51) Int. Cl.: B60N 2/34, B60R 22/00

(54) **A CONVERTIBLE CHAIR INSTALLATION FOR SLEEPING COACHES**
UMWANDELBARE SITZANORDNUNG FÜR NACHTREISEBUSSE
INSTALLATION DE SIEGE TRANSFORMABLE POUR CARS A COUCHETTES

(30) Priority: 11.12.2000 DK 200001855
(43) Date of publication of application: 29.10.2003
(73) Proprietor: V. BRÖNDUM A/S, DK-8600 Silkeborg (DK)
(72) Inventor: THURA PEDERSEN, Michael, DK-7400 Herning (DK)
(74) Representative: Tellefsen, Jens J.
(86) International application number: PCT/DK2001/000819
(87) International publication number: WO 2002/047939

(56) References cited:
- EP-A1- 0 518 046
- EP-A2- 0 313 075

## Description

The present invention concerns a convertible seat installation in vehicles of the so-called "sleeper coach type" or long-range coach with passenger seats which in connection with night driving may be converted to beds, where the seat backs may be pivoted up for forming an upper bed row while between the seats there are inserted fillings for forming a lower bed row.

Usually, this occurs by the backs of the chairs being pivoted up for forming an upper bed row, while fillings are inserted between the seats for forming a lower bed row, whereby eight bed rows may be formed in a common coach. An example of such installation may be seen in WO-A-95/34 442.

WO-A-95/34 442 discloses a convertible seat installation in or for means of transport, such as coaches, and of the type where a row of chairs in a combined sitting and sleeping car can be converted to a row of beds in two levels, viz. by upward pivoting of the backrest of the chairs to form bed elements in an upper row and by transforming the seat portions into a lower bed row, said backrests being hinged to an upper, trans-verse carrier rod projecting horizontally from the upper end of a carrier post located at a side of the chair, the backrests in their swung-up positions on said carrier rods being stabilized by releasable holding and arresting means, wherein the backrest in its swung-up position is effectively arrestable directly to the upper part of the carrier post, such that the backrest in its entirety is carried through the carrier post.

Since we are speaking of vehicles which can brake or be braked more or less abruptly, it is of course increasingly an official requirement that a partitioning structure, also called a "retention device", occurs in the direction of driving before each bed, and which has to withstand a considerable forward directed force. This is, however, not a technical problem by itself, but it becomes problematic anyway thereby that
1) the device should give a small weight increase with respect to the dead weight of the coach,
2) the inner environment of the coach during day and evening driving should be largely unaffected by the presence of the device,
3) the structure of the coach itself should not require any special adaptation so that the safety installation concerned may find application in ordinary standard coaches, and
4) the installation should be flexible to some degree in the way that it, despite an equidistant chair mounting, it will be placeable for defining bed lengths of different sizes with the intention of optimising the bed capacity for a given empirical basis.

Each of these points, and several further conditions, can be elucidated broadly, but it is of particular importance to note that the indicated point 3) at the outset is almost incompatible with an effective retention action for the beds in the upper bed rows. The conditions are better at the lower bed rows, where longitudinal side rails occur in direct association with the supporting chassis of the coach itself. Concerning the upper bed rows, one has been referred to trust the force transmission that may occur to the coach floor via the carrying arms projecting upwards from the seats for supporting the pivoted back pieces. For several reasons, this is no ideal solution.

A convertible chair installation for sleeping coaches according to the invention (as defined in claim 1) includes the novel feature according to which, for delimiting between individual beds in the bed rows, use is made of a portal structure where, with regard to the upper bed rows, each of the portal structures comprises an upper partitioning in the form of a transverse frame part protruding transversally across the bed elements, the frame parts being supported by vertical support legs of different lengths for bearing the frame parts against a simply guided supporting abutment against a suitable chassis supported member, and that for retention of the upper abutment end of the portal structure, use is made of laterally mounted, slanting straps, where the slanting straps are firmly connected to the upper comer areas of the frame parts, and lead rearwardly-downwardly under an angle of about 45° to lower fastening means fixed on the chassis, such as holding members on a seat frame behind.

By the invention it is found possible to solve the problem in an acceptable and surprisingly simple way, namely thereby, with regard to the upper bed rows, there are utilised upright partitioning boards or frame parts, which at both sides are detachably connected with a vertical support leg projecting downwards outside the closely lying side edge of both the upper and the lower bed row and at the bottom being in simply guided supporting abutment against a suitable chassis supported member, preferably only the coach floor itself or the relevant side/wall rail, respectively, of the coach. For retaining the upper abutting end of this portal structure, use is made of laterally mounted, slanting straps extending from upper comer areas of the structure and rearwardly-downwardly under an angle of about 45° to lower fastening means fixed on the chassis, such as holding members on a seat frame behind.

In this structure it has been found that it is possible to fulfil current official requirements by a surprisingly frail design of the portal structures, e.g. with a support leg diameter of only about 25 mm. This contributes to making the whole system easy to establish as an assembling and disassembling system which may be stowed away in a cargo compartment during day and evening driving, so that the above stated conditions 1) and 2) will be immediately fulfilled. This appears also to be case of condition no. 3) as the necessary adaptation of the coach is limited to the local holding means for the lower ends of the support legs and the slanting straps, respectively.

The installation is not primarily attached on the localisation of the seats as the said portal structures may be provided at desired places along the bed rows. If, or when, the slanting straps are fastened to the chair frames behind, hereby may be drawn a certain modular structure, but since it is not decisive whether the strap angle is a little over or a little under 45°, this will not imply any special restriction with regard to a precise longitudinal position of the portal structures relative to the chair positions. Thereby, the installation will also be able to fulfil the condition stated above under point 4).

It is to be mentioned that particularly for the fastening of the lower strap ends or corresponding rod ends, it is a preferred possibility that these ends are made with a coupling fitting for quick fastening to end parts of safety belt pieces, which are already secured in connection with the individual seats.

Preferably, it is decided in advance which variation pattern is desired to be used of the bed lengths, after which the installation is improved correspondingly, including possibly with stud holes in the floor and side rails, and possibly with adapted strap lengths for the portals in the respective positions. Hereby, we are speaking of a number of assembly kits for dedicated placing in arbitrary positions. Thereby, it will be very easy to take out the assembly kits from a stowage compartment for mounting the installation for change to night driving and mount them in the right way in the coach.

The discussion given here only refers to the retention means for the upper bed rows, which also is the primary aspect of the invention, since, as outlined; there are better conditions for establishing these means at the lower bed rows. Then it is only to be confirmed that the inventive principle will be applicable in a very advantageous way also at the lower bed rows, i.e. also here with the use of easily handled and stowable, low portal or gable elements. These will normally be strap connected to the chair frame close behind.

The invention is illustrated by a preferred embodiment on the drawing, on which:
- Fig. 1: is a perspective view of a pair of coach seats converted to sleeping position and provided with retention devices according to the invention,
- Fig. 2: is an overview of the parts forming part of the assembled retention installation,
- Figs. 3A and 3: are schematic side views of the seat rows in right and left side, respectively, of a long-range coach,
- Fig. 3C: is a more detailed side view of a section of a part of a seat row, and
- Fig. 4: is a cross-sectional view of a coach with inclining cabin ceiling showing a second embodiment of the retention installation according to the invention, where this is adapted the inclining cabin ceiling.

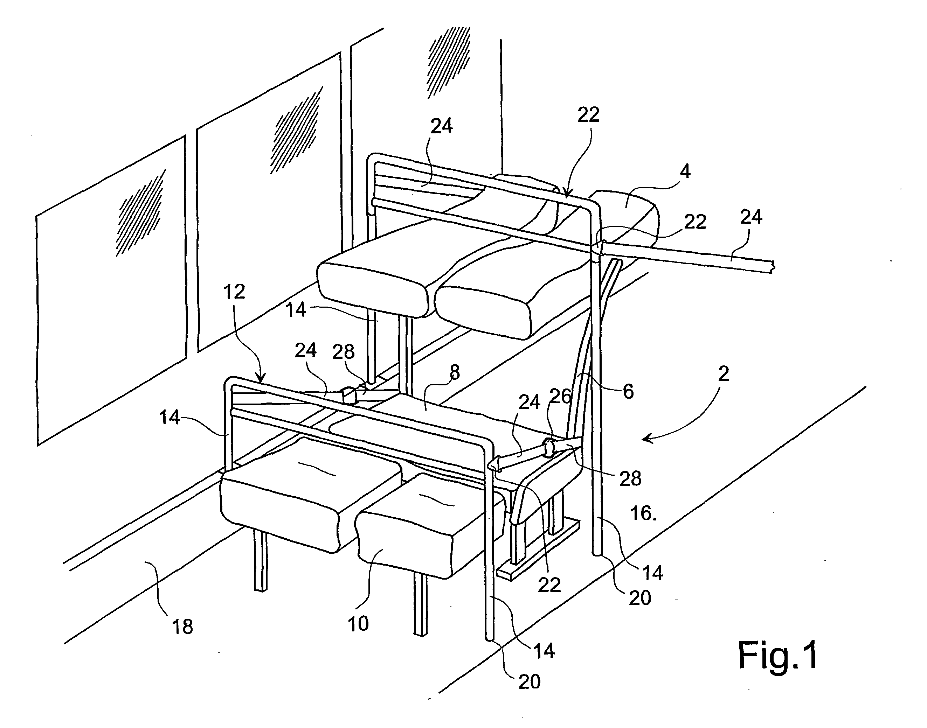

In Fig. 1 is shown a set of coach seats 2 which in a easily recognisable way are converted to bed elements in an upper and a lower plane by the backs 4 being swung up to horizontal position about transversal axles connected with the upper end of upright support arms 6 for the seat backs, whereas before the seat part 8 there are inserted filler members 10 for bridging to the seat in front; these members 10 may be contained in a compact seat structure 8, 10 in the day position of the seats, so that they do not require special stowage space. The length of the seat backs 4 corresponds to the total length of the lower bed parts 8, 10, typically with a modular dimension of 77-85 cm, so that both forward and rearward there will be continuity in the bed rows in accordance with the selected modular distance between the chairs. It will be appreciated that this modular dimension will not correspond to a usual length dimension of a bed and neither to exactly half of a such dimension, and for good utilisation of the space emphasis on differentiation of bed lengths for the travelling public has thus to be made in an otherwise well-known way.

This may in theory be determined from trip to trip, but when it comes to requirement for physical separation between the lying passengers, in practice a more substantial localisation of individual bed section has to be decided which the actual passengers then have to be attempted to be accommodated into. Between these sections, the mentioned retention devices for night driving are then disposed, of which Fig. 1 shows one in upper and one in lower bed row. Each of the devices are constituted by a portal structure with an upper partitioning in the form of a transverse frame part 12 protruding transversally across the bed elements, slightly elevated over these and shortly outstanding there from at the sides. Here, the frame parts 12 are supported by vertical support legs 14 of adapted, different lengths for bearing the frame parts 12 against the coach floor and the upper side of the edge or wall rail 18 of the coach side concerned. The way of fastening into said rail is sufficiently strong to withstand use related action by the frame parts 12 in the rearward direction.

At the sides, the frame parts 12 are firmly connected with holding eyelets 22 on rearward extending straps 24 which with adjusted lengths are intended for fastening to a chair chassis behind, preferably, however, by an insert connection 26 with the belt buckle at the outer part 28 of the safety belt associated with this chassis, whereby respective frame parts 12 are blocked against forward displacement. As shown, the straps 24, 28 in the lower bed row may extend rearward/downward under a relatively small angle with the floor, whereas the straps in the upper row have to form a greater angle with the floor and possibly be passed past the chair chassis placed immediately behind in order to reach down to a secure fastening without the strap angle becoming too large. This angle with the floor should not go below 40-45°.

Immediately it will appear that the straps facing inward toward the centre aisle of the coach to some extent will be prohibitive for free passage into and out from the bed places. This is not to be attempted explained away as it will be some of the drawbacks connected with utilising the coach as cheap night accommodation. However, it is to be noted that the same straps also will occur with a laterally supporting action on the lying passengers, an advantage when driving through tight curves.

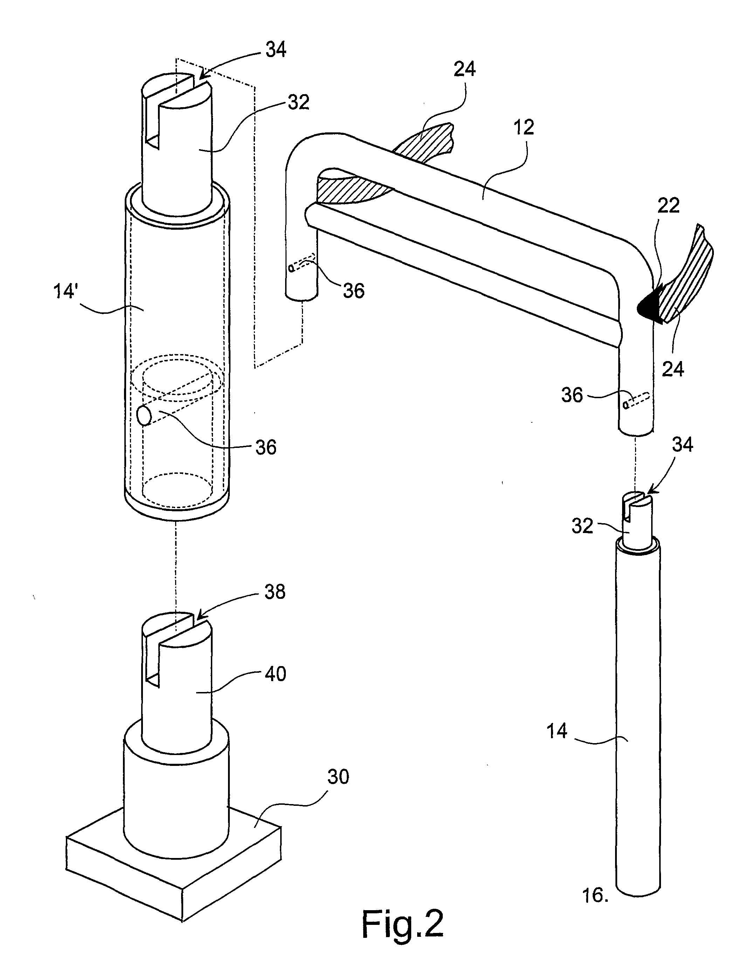

In Fig. 2 is shown an embodiment of the structure of the constructional elements in a retention device comprising a frame piece 12, with a longer leg 14, respectively, for supporting on the floor 16, and a shorter leg 14' for insertion in a fitting 30, which in a not specified but known way is intended for anchoring in an edge or wall rail 18 of a coach side. As it appears, the legs 14 comprise studs 32 in one end, comprising a slot 34 for receiving a transverse slotted pin 36 in the frame part leg. The short leg 14' also comprises a slotted pin 36 for being received in a slot 38 in the stud 40 on the fitting. Hereby is achieved certain stability of the retention device against turning of the frame piece 12 as the slotted pins 36, when these are suspended in the slots 34, 40 blocks against this movement. The long leg 14 can be provided with downwardly projecting pin in a not shown embodiment in free end facing the coach floor 16 for being accommodated in stud holes in the coach floor 16, or holes in the fitting mounted thereon. In a further embodiment, the long leg 14 facing the coach floor may be intended for receiving a stud standing up from the coach floor 16.

In Fig. 2 is outlined how the occurring constructional elements 12, 14, 14', 30 for forming the retention devices may be closely stowed together in the not used state.

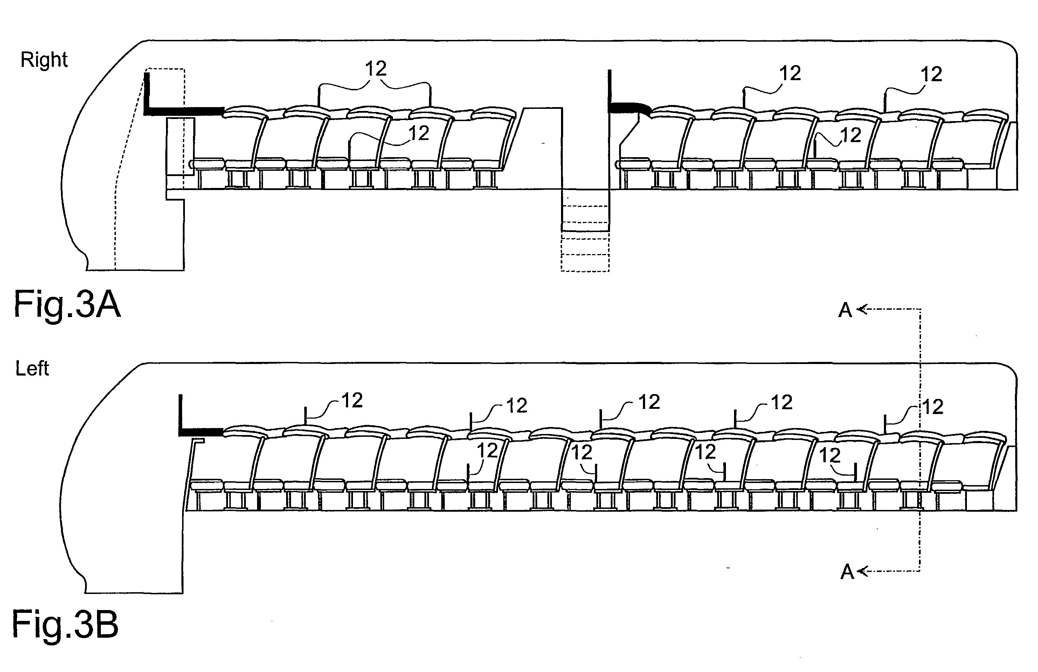

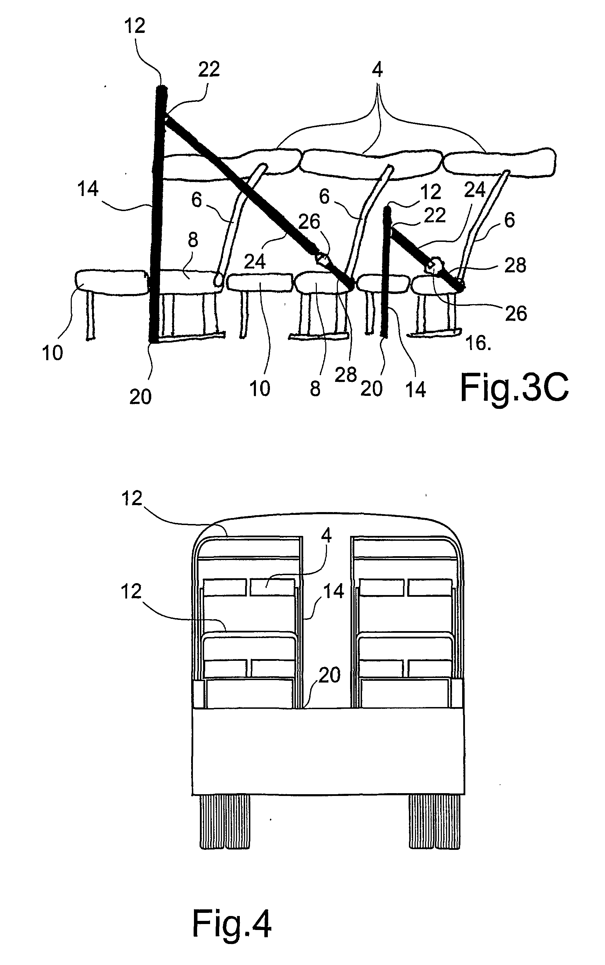

Fig. 3 shows how the two sides of a bus may be divided into respective bed lengths marked with colour indications for associated partitioning. Associated bed lengths are indicated in the inserted table.

In Fig. 4, an alternative embodiment of the retention structure according to the invention is shown, where the frame part 12 is adapted to a rounded side 42 of the coach. Here it is to be mentioned that it is presupposed that the retention structure is adapted to the internal cross-sectional shape of the concerned vehicle, i.e. an inclining or curved wall section. This, however, does not change the inventive aspect, which comprises a retentive structure which is easy to erect and take down in connection with changing a coach with usual seats into a sleeper coach, and which also allow great flexibility with respect to bed length, and which may be stowed away without taking up much cargo compartment space and which will not increase the dead weight of the coach noticeably.

## Claims

1. A convertible seat installation in vehicles of the so-called "sleeper coach type" or long-range coach with passenger seats which in connection with night driving may be converted to beds, where the seat backs (4) may be pivoted up for forming an upper bed row while between the seats (2) there are inserted fillings (10) for forming a lower bed row, **characterised in that** for delimiting between individual beds in the bed rows use is made of a portal structure where, with regard to the upper bed rows, each of the portal structures (12, 14, 14') comprises an upper partitioning in the form of a transverse frame part (12) protruding transversally across the bed elements, the frame parts (12) being supported by vertical support legs (14) of different lengths for bearing the frame parts (12) against a simply guided supporting abutment against a suitable chassis supported member, and that for retention of the upper abutment end of the portal structure (12, 14, 14'), use is made of laterally mounted, slanting straps (24), where the slanting straps (24) are firmly connected to the upper comer areas of the frame parts (12), and lead rearwardly-downwardly under an angle of about 45° to lower fastening means fixed on the chassis, such as holding members (26, 28) on a seat frame behind.

2. A convertible seat installation according to claim 1, **characterised in that** the slanting straps (24) are designed with means for longitudinal adjustment in their parts between the upper abutment end of the portal structure (12, 14, 14') and the fastening means fixed on the chassis such as holding members (16, 18) on a seat frame behind.

3. A convertible seat installation according to claim 1 or 2, **characterised in that** the portal structure (12, 14, 14') is constituted by an assembling and disassembling system for stowing away in a cargo compartment in periods where it is not in use.

4. A convertible seat installation according to any of claims 1-3, **characterised in that** the necessary adaptation of the coach with the portal structures (12, 14, 14') is constituted by local holding means (30, 26, 28) for the lower end of the support legs (14') and the slanting straps (24), respectively.

5. A convertible seat installation according to claim 4, **characterised in that** the local holding means for the slanting straps (24) are constituted by coupling fittings (26) for quick fastening to end members of safety belt pieces (28) which are anchored in connection with the individual seats.

6. A convertible seat installation according to claim 4 or 5, **characterised in that** the support legs (14, 14') are anchored in an edge or wall rail (18) of the coach and to the floor (16) of the coach.

7. A convertible seat installation according to any of claims 4 - 6, **characterised in that** the local holding means (30) for the support legs (14, 14') of the portal structure is constituted by a fitting (30), which is detachably fastened in an edge or wall rail (18) of the coach, with an upward projecting stud (40) to be received in the lower end of the one short leg (14') of the portal structure, the stud (40) having a slot (38) for receiving a transverse slotted pin (36), and the legs (14, 14') at the opposite, upwardly projecting end comprising a stud (32) to be received in the end of a frame part (12), the end also comprising a slotted pin (36) for being received in a slot (34) in the stud (32).

## Patentansprüche

1. Wandelsitzanordning in Fahrzeugen vom so genannten "Schlafwagentyp" oder einem Langstreckenwagen mit Fahrgastsitzen, die anlässlich Nachtfahrten in Betten umgewandelt werden können, wobei die Rückenlehnen (4) nach oben geschwenkt werden können, um eine obere Bettreihe auszubilden, während zwischen den Sitzen (2) Füllstücke (10) eingefügt werden, um eine untere Bettreihe auszubilden, **dadurch gekennzeichnet, dass** zur Abgrenzung zwischen individuellen Betten in Bettreihen von einer Portalkonstruktion Gebrauch gemacht wird, bei der hinsichtlich der oberen Bettreihen jeden der Portalkonstruktionen (12,14,14') obere Trennplatten in der Form von einem queren Gestellteil (12) verwendet werden, die entlang die Bettelementen quer vorspringen, wobei die Gestellteile (12) von vertikalen Stützbeinen (14) von unterschiedlichen Längen unterstützt werden, um die Gestellteile (12) gegen eine einfache tragende Stützanlage an einem geeigneten chassisgestützten Glied zu unterstützen, und dass zum Festhalten des oberen Anlage-Endes der Portalkonstruktion (12,14,14') von seitlich montierten, schrägen Gurten (24) Gebrauch gemacht wird, wobei die schrägen Gurten (24) mit den oberen Eckenbereichen der Gestellteilen (12) fest verbunden sind, und sich nach hinten und nach unten unter einem Winkel von ungefähr 45° zu am Chassis befestigten unteren Befestigungsmitteln wie z.B. Haltegliedern (26,28) an einem Sitzgestell dahinter erstrecken.

2. Wandelsitzanordning nach Anspruch 1, **dadurch gekennzeichnet, dass** die schrägen Gurte (24) mit Mitteln zur Längseinstellung ihrer Teile zwischen den oberen Anlage-Enden der Portalkonstruktion (12,14,14') und den am Chassis befestigten Befestigungsmitteln wie z.B. Haltegliedern (16,18) an einem Sitzgestell dahinter gestaltet sind.

3. Wandelsitzanordning nach Anspruch 1 oder 2, **dadurch gekennzeichnet, dass** die Portalkonstruktion (12,14,14') durch ein Montage- und Demontagesystem zum Wegräumen in einem Frachtraum in Zeiten, in denen es nicht in Gebrauch ist, gebildet wird.

4. Wandelsitzanordnung nach einem der Ansprüche 1 bis 3, **dadurch gekennzei chnet, dass** die notwendige Anpassung des Wagens an den Portalkonstruktionen (12,14,14') durch lokale Halteeinrichtungen (30,26,28) für das untere Ende der Stützbeine (14') bzw. der schrägen Gurte (24) gebildet wird.

5. Wandelsitzanordning nach Anspruch 4, **dadurch gekennzeichnet, dass** die lokalen Halteeinrichtungen für die schrägen Gurte (24) durch Verbindungsstücke (26) für schnelle Befestigung an Endgliedern von Sicherheitsgurtstücken (28) gebildet werden, die in Verbindung mit den individuellen Sitzen verankert sind.

6. Wandelsitzanordnung nach Anspruch 4 oder 5, **dadurch gekennzeichnet, dass** die Stützbeine (14,14') in einer Rand- oder Wandschiene (18) des Wagens und am Boden (16) des Wagens verankert sind.

7. Wandelsitzanordning nach einem der Ansprüche 4 bis 6, **dadurch gekennzeic hnet, dass** die lokalen Halteeinrichtungen (30) für die Stützbeine (14,14') der Portalkonstruktion von einem Stück (30) gebildet werden, das abnehmbar in einer Rand- oder Wandschiene (18) des Wagens befestigt ist, mit einem nach oben vorstehenden Bolzen (40) zur Aufnahme im unterem Ende des einen kurzen Beines (14') der Portalkonstruktion, wobei der Bolzen (40) einen Slitz (38) zur Aufnahme eines quer verlaufenden Schlitzstiftes (36) aufweist und die Beine (14,14') am entgegengesetzten, nach oben vorstehenden Ende einen Bolzen (32) zur Aufnahme im Ende eines Gestellteils (12) aufweisen, welches Ende ebenfalls einen Schlitzstift (36) zur Aufnahme in einen Schlitz (34) im Bolzen (32) aufweist.

## Revendications

1. Installation de sièges convertibles dans des véhicules désignés "du type autocar à couchettes", ou un autocar longue distance avec des sièges passagers qui, en liaison avec la conduite de nuit, peuvent être transformés en lits, où les dossiers (4) des sièges peuvent pivoter vers le haut pour former une rangée de lits supérieure tandis que, entre les sièges (2), sont insérés des équipements (10) pour former une rangée de lits inférieure, **caractérisée en ce que**, pour la délimitation entre des lits individuels dans les rangées de lits, on utilise une structure de portique où, en ce qui concerne les rangées de lits supérieures, chacune des structures de portique (12, 14, 14') comporte une plaque de séparation supérieure sous forme d'une pièce de cadre transversale (12) en saillie transversalement aux éléments des lits, la pièce de cadre (12) étant supportée par des montants de support verticaux de longueur différente pour porter les pièces de cadre (12) contre une butée de support simplement guidée contre un élément approprié supporté par le châssis, et **en ce que**, pour la fixation de l'extrémité de butée supérieure de la structure de portique (12, 14, 14'), on utilise des bandes inclinées (24) montées latéralement, les bandes inclinées (24) étant rigidement liées aux zones de coin supérieures des pièces de cadre (12) et s'étendant vers l'arrière-vers le bas sous un angle d'environ 45° vers des moyens d'attache inférieurs fixés sur le châssis, tels que des éléments de maintien (26, 28) , sur un arrière de bâti de siège.

2. Installation de sièges convertibles selon la revendication 1, **caractérisée en ce que** les bandes inclinées (24) sont conçues avec des moyens pour le réglage longitudinal dans leurs brins entre l'extrémité de butée supérieure de la structure de portique (12, 14, 14') et les moyens d'attache fixés sur le châssis, tels que des moyens de maintien (16, 18) sur un arrière de bâti de siège.

3. Installation de sièges convertibles selon la revendication 1 ou 2, **caractérisée en ce que** la structure de portique (12, 14, 14') est constituée par un système de montage et de démontage pour la mise en place dans une soute à bagages en périodes où elle n'est pas utilisée.

4. Installation de sièges convertibles selon une quelconque des revendications 1-3, **caractérisée en ce que** l'adaptation nécessaire de l'autocar avec les structures de portique (12, 14, 14') est constituée par des moyens de maintien locaux (30, 26, 28) pour l'extrémité inférieure des montants de support (14') et les bandes inclinées (24), respectivement.

5. Installation de sièges convertibles selon la revendication 4, **caractérisée en ce que** les moyens de maintien locaux pour les bandes inclinées (24) sont constitués par des accouplements (26) pour l'attache rapide à des éléments d'extrémité de pièces de ceinture de sécurité (28) qui sont ancrées en liaison avec les sièges individuels.

6. Installation de sièges convertibles selon la revendication 4 ou 5, **caractérisée en ce que** les montants de support (14, 14') sont ancrés dans un rail de paroi ou de bord (18) de l'autocar et au plancher (16) de l'autocar.

7. Installation de sièges convertibles selon une quelconque des revendications 4-6, **caractérisée en ce que** les moyens de maintien locaux (30) pour les montants de support (14, 14') de la structure de portique sont constitués par une pièce de montage (30) qui est fixée de façon amovible à un rail de paroi ou de bord (18) de l'autocar, ayant un embout en saillie vers le haut (40) destiné à être reçu dans l'extrémité inférieure d'un montant court (14') de la structure de portique, l'embout (14') ayant une fente (38) pour recevoir un axe transversal (36), et les montants (14, 14') au niveau de l'extrémité en saillie vers le haut, opposée, comprenant un embout (32) destiné à être reçu dans l'extrémité d'une partie de cadre (12), l'extrémité comprenant également un axe (36) destiné à être reçu dans une fente (34) dans l'embout (32).
